**Europäisches Patentamt**

**European Patent Office**

**Office européen des brevets**

(19)

(11) Veröffentlichungsnummer: **0 349 858 B1**

(12) **EUROPÄISCHE PATENTSCHRIFT**

(45) Veröffentlichungstag der Patentschrift: **28.09.94**

(51) Int. Cl.5: **C14C 11/00**, C08G 18/12, C08G 18/42

(21) Anmeldenummer: **89111522.2**

(22) Anmeldetag: **24.06.89**

(54) **Verfahren zur Herstellung von Lackleder.**

(30) Priorität: **07.07.88 DE 3823048**

(43) Veröffentlichungstag der Anmeldung:
**10.01.90 Patentblatt 90/02**

(45) Bekanntmachung des Hinweises auf die
Patenterteilung:
**28.09.94 Patentblatt 94/39**

(84) Benannte Vertragsstaaten:
**AT BE CH DE FR GB IT LI NL**

(56) Entgegenhaltungen:
**EP-A- 0 073 389**
**DE-A- 1 445 204**

(73) Patentinhaber: **BAYER AG**

**D-51368 Leverkusen (DE)**

(72) Erfinder: **Noll, Klaus, Dr.**
**Morgengraben 6**
**D-5000 Köln 80 (DE)**
Erfinder: **Pedain, Josef, Dr.**
**Haferkamp 6**
**D-5000 Köln 80 (DE)**
Erfinder: **Zorn, Bruno, Dr.**
**Semmelweisstrasse 89a**
**D-5000 Köln 80 (DE)**
Erfinder: **Schmid, Rosemarie**
**Schopenhauerstrasse 8**
**D-5090 Leverkusen (DE)**

**Beschreibung**

Die Erfindung betrifft die Hochglanzlackierung von Leder mit Zweikomponenten-Systemen aus Polyurethanen.

Derartige Systeme sind im Prinzip seit längerer Zeit bekannt und dienen zur Erzeugung von hochglänzenden Lacken auf Leder, für die Herstellung von Schuhen und Bekleidungsartikeln.

Diese Art von Lackierung führt zu einer völligen Abdeckung der Lederoberfläche.

Zur Herstellung der Lackleder aus Polyurethanen werden gegebenenfalls mit Farb- und Effektstoffen versehene Lösungen von Polyesterdiolen mit Lösungen aus Polyisocyananten vermischt und der so gemischte Lack auf grundierte Leder aufgetragen. Der Auftrag kann durch Spritzen, Gießen, Plüschen usw. erfolgen; durch die Reaktion von Isocyanat- und Hydroxylgruppen entsteht danach im Laufe mehrerer Stunden der fertige Lack. Er zeichnet sich durch gute Lösungsmittelfestigkeit, Knickfestigkeit, Elastizität, Kratzfestigkeit und insbesondere sehr hohen Glanz aus.

Die verwendeten Hydroxylpolyester sind in der Regel aus aliphatischen Dicarbonsäuren und difunktionellen Alkoholen aufgebaut, unter gelegentlicher Mitverwendung verzweigender Komponenten, wie etwa Trimethylolpropan. Die Molgewichte dieser Ester liegen um 2000. Die Polyisocyanate leiten sich in der Regel von aromatischen Diisocyanaten ab und werden durch Adduktbildung mit niedermolekularen Polyolen oder durch Trimerisierung gewonnen. Gelöst sind beide Komponenten vorzugsweise in niedrig siedenden Lösungsmitteln.

Besonders bei der Herstellung von Schuhen wird das lackierte Material hohen Belastungen unterworfen. Die Leder werden unter dem Einfluß von Wärme im thermosetting-Prozeß dauerhaft verformt, wobei die Lackleder eine Falten- und gegebenenfalls Rißbildung erleiden.

Aufgabe der vorliegenden Erfindung ist es, Lackleder mit ausgezeichnetem "thermo-setting" herzustellen.

Die Aufgabe wird dadurch gelöst, daß man als Hydroxylkomponente anstelle der üblichen Hydroxylpolyester spezielle Hydroxygruppen tragende Oligourethane einsetzt.

Gegenstand der vorliegenden Erfindung ist deshalb ein Verfahren zur Herstellung von hochglänzenden Lackledern mittels Zweikomponenten-Polyurethansystemen durch Umsetzung von Hydroxylgruppen enthaltenden Oligourethanen mit Polyisocyanaten, dadurch gekennzeichnet, daß das Oligourethan aufgebaut ist aus

A) mindestens 2 Makrodiolen im Molverhältnis von 1:6 bis 6:1, wobei

1) das eine Makrodiol ein mittleres Molekulargewicht von 254 bis 650 hat und mindestens einen aromatischen oder gegebenenfalls ungesättigten cycloaliphatischen Ring enthält, und

2) das zweite Makrodiol eine mittleres Molekulargewicht von 1200 bis 3000, mindestens aber ein 3-faches Molgewicht von A/1 besitzt,

und

B) mindestens einem Diisocyanat, wobei das Molverhältnis Makrodiole/Diisocyanat 10:9 bis 10:3 beträgt.

Vorzugsweise beträgt das Molverhältnis der Makrodiole 1:3 bis 3:1 und das Verhältnis Makrodiole/Diisocyanat 10:7 bis 10:4.

Die relativ kurzkettigen, 6-Ring-haltigen Makrodiole oder einen mit dem mittleren Molekulargerwicht von 254 bis 650 können Polyether, Polyester oder Polycarbonate sein. Sie müssen erfindungsgemäß mindestens einen aromatischen (z.B. Benzolring) oder einen cycloaliphatischen, vorzugsweise Cyclohexan-, oder ungesättigten Ring, vorzugsweise Cyclohexenring, enthalten. Sie haben eine Hydroxylfunktionalität von 1,8 bis 2,2, bevorzugt von 1,95 bis 2,05, sind also im wesentlichen bifunktionell. Die erfindungsgemäßen Polyether in diesem kurzkettigen Molekulargewichtsbereich enthalten als Startermolekül cyclische Substanzen wie Bisphenole, z.B. seien genannt:

Hydrochinon, Resorcin und 4,4′-Dihydroxy-diphenylpropan. Auf die Startermoleküle werden Propylenoxid, Ethylenoxid, Butylenoxid Styroloxid und/oder Epichlorhydrin einzeln, im Gemisch oder in Sequenz addiert unter Bildung von OH-Endgruppen-haltigen Polyethern. Pro Reaktivgruppe (z.B. OH) der Startermoleküle soll zumindest eine Hydroxyethergruppierung addiert sein. Als Polyether bevorzugt verwendet werden auf 4,4′-Dihydroxy-diphenylpropan gestartete Polyether, besonders bevorzugt solche auf Basis von Propylenoxid in einem Molekulargewichtsbereich von 350 bis 600.

Als Polyester kommen hauptsächlich solche in Frage, die aus cyclischen Carbonsäuren aufgebaut sind, wie z.B. auf Basis von Orthophthalsäure oder Orthophthalsäureanhydrid Isophthalsäure, Terephthalsäure, Hexahydrophthalsäure, Tetrahydrophthalsäure, Hexahydroterephthalsäure. Polyester auf der Basis dieser Säuren werden bevorzugt eingesetzt. Aber auch die anderen Säuren, die zur Herstellung der Polyester (2) angeführt werden, können gleichfalls zur Modifizierung verwendet werden. Besonders bevorzugt sind Ethandiol-Polyester der Phthalsäure vom Molekulargewicht 350 bis 600.

Als Hydroxylgruppen aufweisende Polycarbonate kommen z.B. solche in Betracht, die cyclische Diole enthalten, z.B. 1,4-Hydrochinonbishydroxyethylether oder 4,4'-Diphenylpropan-bishydroxyproyl-ether. Besonders bevorzugt werden Polycarbonate auf 1,4-Dimethylolcyclohexan im Molekulargewichtsbereich von 350 bis 600.

Die Makrodiole (2) mit einem mittleren Molekulargewicht von 1200 bis 3000 können beliebige Polyether, Polyester und Polycarbonate mit der o.g. mittleren Hydroxylfunktionalität sein. Die erfindungsgemäß hierzu in Frage kommenden, Hydroxylgruppen aufweisenden Polyether sind solche der an sich bekannten Art und werden z.B. durch Polymerisation von cyclischen Ethern wie Ethylenoxid, Propylenoxid, Butylenoxid, Tetrahydrofuran, Styroloxid oder Epichlorhydrin mit sich selbst, z.B. in Gegenwart von $BF_3$, oder durch Anlagerung dieser Ringverbindungen, gegebenenfalls im Gemisch oder nacheinander, an Startkomponenten mit reaktionsfähigen Wasserstoffatomen wie Alkohole, Amine, z.B. Wasser, Ethylenglykol, Propylenglykol-1,2- oder -1,3 oder 4,4'-Dihydroxydiphenylpropan, hergestellt.

Als Hydroxylgruppen aufweisende Polycarbonate kommen solche der an sich bekannten Art in Betracht, die z.B. durch Umsetzung von Diolen wie Propandiol-1,3, Butandiol-1,4 und/oder Hexandiol-1,6, Di-, Tri- und/oder Tetraethylenglykol mit Diarylcarbonaten, z.B. Diphenylcarbonat, oder Phosgen hergestellt werden können, vorzugsweise Polycarbonate auf Basis von Hexandiol-1,6, sowie gegebenenfalls modifizierend wirkenden Co-Diolen in untergeordneten Mengen (ca. 5 bis 35 Mol-% der Diole), z.B. Butandiol-1,4 oder Diethylenglykol. Auch Polycarbonate auf Basis von $HO(CH_2)_6.O.CO.(CH_2)_5.OH$ kommen in Frage.

Die in Frage kommenden, Hydroxylgruppen aufweisenden Polyester sind z.B. Umsetzungsprodukte von mehrwertigen, vorzugsweise zweiwertigen und gegebenenfalls zusätzilch dreiwertigen Alkoholen mit mehrwertigen, vorzugsweise zweiwertigen Carbonsäuren. Anstelle der freien Polycarbonsäuren können auch die entsprechenden Polycarbonsäureester von niedrigen Alkoholen oder deren Gemische zur Herstellung der Polyester verwendet werden.

Die Polycarbonsäuren können aliphatischer, cycloaliphatischer, aromatischer und/oder heterocyclischer Natur sein und gegebenenfalls, z.B. durch Halogenatome, substituiert und/oder ungesättigt sein. Als Beispiele seien genannt: Adipinsäure, Bernsteinsäure, Korksäure, Azelainsäure, Sebacinsäure, Phthalsäure, Isophthalsäure, Tetra- und Hexahydrophthalsäure, Tetrachlorphthalsäure und Maleinsäureanhydrid.

Als für die Herstellung der erfindungsgemäßen Oligourethane zu verwendende Diisocyanate kommen insbesondere solche in Betracht, in denen die Isocyanatgruppen an aromatische Kohlenwasserstoffreste gebunden sind. Beispielhaft seien hier genannt:

2,4- und 2,6-Toluylendiisocyanat und beliebige Gemische dieser Isomeren, Diphenylmethan-2,4'- und/oder -4,4'- und/oder -2,2'-diisocyanat und symmetrische oder unsymmetrische substituierte mono- bis tetraalkylsubstituierte $C_1$-$C_4$-Alkyl-Diphenylmethan-diisocyanate.

Es können jedoch auch aliphatische und/oder cycloaliphatische Diisocyanate eingesetzt werden, wie z.B. 1,4-Tetramethylendiisocyanat, 1,6-Hexamethylendiisocyanat, 1,12-Dodecandiisocyanat, 1-Isocyanato-3,3,5-trimethyl-5-isocyanatomethyl-cyclohexan, 4,4'-Diisocyanato-dicyclohexylmethan, Cyclobutan-1,3-diisocyanat, Ccylohexan-1,3- und -1,4-diisocyanat, 1,4-Bis-isocyanatomethyl-cyclohexan, 2,4- und 2,6-Hexahydro-toluylendiisocyanat, Hexahydro-1,3- und/oder -1,4-xylylendiisocyanat 2,4'-und 2,2'-Dicyclohexylmethandiisocyanat sowie beliebige Gemische der Stellungs- und/oder Stereoisomeren der cycloaliphatischen Diisocyanate.

Die Umsetzung der Makrodiole mit den Diisocyanaten erfolgt bei Temperaturen von 60-120 ° C, vorzugsweise unter Zuhilfenahme eines inerten Lösungsmittels, wie etwa Toluol, Xylol, Ethylacetat, Butylacetat, Methyl- und Ethylglykolacetat, 1- und 2-Methoxypropylacetat, Aceton, Methylethylketon, Methylisobutylketon und Tetrahydrofuran. Die Umsetzung ist dann beendet, wenn sich IR-spektroskopisch keine freien Isocyanatgruppen mehr nachweisen lassen.

Bevorzugt sind die Lösungen konzentriert, enthalten also mehr als 50, besser noch mehr als 70 % Festkörper. Die Viskosität sollte dabei Werte von etwa 5000-20 000 mPas erreichen. Dies ermöglicht die Bildung von verarbeitungsfertigen Lacken mit hohem Festkörperanteil; solche Lacke verursachen eine geringe Lösungsmittelbelastung der Umwelt und erlauben das Aufbringen von Überzügen hoher Dichten im Einsichtverfahren.

Die erfindungsgemäßen Hydroxyloligourethane werden nach dem in "Das Leder" 4, 10, S. 234 ff (1953) oder "Tanning, Dyeing, Finishing", 4. Aufl. (Nov. 1986), S. 212, Bayer AG, ausführlich geschilderten Verfahren unter Zusatz von Polyisocyanaten zu anwendungsfertigen Lacken verarbeitet. Solche Lacke haben naturgemäß nur eine begrenzte Lagerzeit, die aber eine problemlose Verarbeitung über mindestens 8 Stunden garantiert. Vorzugsweise werden aromatische Polyisocyanate eingesetzt, die in Substanz oder verdünnt mit Lösungsmitteln, die mit Isocyanatgruppen nicht reagieren, verwendet werden. Die Funktionalität der Polyisocyanate beträgt vorzugsweise etwa 3. Zu ihrer Herstellung setzt man vorzugsweise Diisocyanate mit trifunktionellen Polyolen wie Trimethylolpropan oder Glycerin oder mit sich selbst zu Derivaten mit

3

Isocyanurat-Ringstruktur um. Beispiele für erfindungsgemäß einsetzbare Diisocyanate sind die auf Seite 7 erwähnten. Die Applikation erfolgt vorzugsweise durch Spritzen oder Gießen. In beiden Fällen können einschlägige Zusatzmittel wie Katalystoren, Verlaufmittel sowie gegebenenfalls geeignet Lösungsmittel zur Erreichung der gewünschten Verarbeitungsvikosität zugesetzt werden.

Beispiel 1

A) 192 Teile eines Polyesters aus Ethylenglykol und Phthalsäureanhydrid der OH-Zahl 195 sowie 1872 Teile eines Polyesters aus Diethylenglykol und Adipinsäure der OH-Zahl 43 werden miteinander vermischt und in 276 Teilen 1-Methoxypropyl-2-acetat gelöst. Zu dieser Lösung werden 139 Teile 2,4-Diisocyanattoluol gegeben, die Temperatur wird langsam auf 80°C erhöht und die Mischung solange gerührt, bis IR-spektroskopisch keine NCO-Gruppen mehr nachgewiesen werden können. Gegen Ende der Reaktion werden nach und nach 276 Teile Ethylacetat langsam zugegeben. Die entstehende Lösung hat einen Festkörpergehalt von 80 % und eine Viskosität von 16 000 mPas/23°C.

B) 1000 Teile dieser Lösung werden mit 630 Teilen einer 67 %igen Lösung eines Polyisocyanats aus 2,4-Diisocyanatotoluol und Trimethylolpropan und Diethylenglykol (Molverhältnis 6:4) in Xylol/Butylacetat 1:1 (NCO-Gehalt der Lösung: ca. 12 %) vermischt und mit 700 Teilen einer Mischung aus Methylethylketon und Cyclohexanon im Verhältnis 7:3 verdünnt. Die Lösung besitzt 49 % Festkörper und eine Viskosität von 30" (Ford-Becher, 4 mm Düse).

Mit Hilfe des auf Seite 8 beschriebenen Gießverfahrens wird auf ein geschliffenes, grundiertes Leder ein Auftrag von ca. 90 g/m$^2$ Feststoff aufgebracht. Nach 8-stündigem Trocknen bei 60°C ist ein Lackleder entstanden, das guten Glanz und gute Fülle besitzt.

C) die thermosetting-Eigenschaft wird nach W. Fischer und W. Schmidt, "Leder- und Häutemarkt" 22 - (1970), 3, S. 1-6 mit folgender Versuchsanordnung gemessen:

Mit Hilfe des Handlastometers der Firma Ring Mechanische Werkstätten, Pirmasens (in Anlehnung an DIN 53 325) wird die Wärmeverformung bei 30 % Dehnung, 120°C 3 Minuten lang aufrechterhalten und die Lackoberfläche nach folgender Benotung bewertet:

1: keine Fehler
2: Auftreten von Falten
3: Auftreten von Falten und kleinen Rissen
4: starke Rißbildung

Diese Ergebnisse sind in der nachfolgenden Tabelle 1 zusammengefaßt:

Beispiel 2 (Vergleichsbeispiel)

Nach der Arbeitsweise des Beispiels 1B wird ein Lack aus folgenden Komponenten zubereitet und verarbeitet:
1000 Teile eines Polyesters aus Adipinsäure und Diethyllenglykol und Trimethylolpropan (Molverhältnis 94:6) der OH-Zahl 60,
850 Teile des in Beispiel 1B beschriebenen Polyisocyanats und
1000 Teile eines Gemisches auf gleichen Anteilen Ethyl- und Butylacetat.

Dieser Lack besitzt 51,5 % Festkörper und hat eine Viskosität von 25" (Ford-Becher, 4 mm Düse).

Das Ergebnis des Tests nach Beispiel 1C ist ebenfalls in der nachfolgenden Tabelle aufgeführt.

Beispiele 3-8

Die Hydroxyoligourethane dieser Beispiele werden nach der Arbeitsweise des Beispiels 1A hergestellt. Ihre Zusammensetzungen sind in Tabelle 2 zusammengefaßt.

Tabelle 1

| Beispiel | 1 | 2[1] | 3[1] | 4[1] | 5 | 6[1] | 7 | 8 |
|---|---|---|---|---|---|---|---|---|
| thermosetting[2] | 1 | 4 | 3 | 3 | 1 | 4 | 1-2 | 1-2 |

[1] Vergleichsbeispiel
[2] siehe Beispiel 1C

EP 0 349 858 B1

# T a b e l l e   2

## O l i g o u r e t h a n

| Beispiel | 3 | 4 | 5 | 6 | 7 | 8 |
|---|---|---|---|---|---|---|
| Polyester | A | A | A/C<br>1.2/1.8 | B | B/C/D<br>1/0.77/1.23 | D/E<br>1.8/1.2 |
| Diisocyanat | MDI | MDI | TDI | TDI | TDI | TDI |
| Mol PE:DI | 3:2 | 2:1 | 3:2 | 3:2 | 3:2 | 3:2 |
| Lösungsmittel | BuAc | BuAc | EE | EE | EE | EE/MPA<br>1/1 |
| Konz. (%) | 80 | 80 | 80 | 80 | 80 | 80 |
| Visk. (mPas) | 25000 | 3800 | 10000 | 33000 | 22000 | 16000 |

## L e d e r l a c k

| | | | | | | |
|---|---|---|---|---|---|---|
| Oligourethan | 1000 | 1000 | 1000 | 1000 | 1000 | 1000 |
| Polyisocyanat | 650 | 600 | 650 | 650 | 650 | 650 |
| Verdünner[1] | 800 | 800 | 800 | 800 | 800 | 800 |
| Konz. (%) | 50,4 | 49,6 | 50,4 | 50,4 | 50,4 | 50,4 |
| Visk. (sec) | 30 | 15 | 35 | 25 | 35 | 25 |

A:    Polyester aus Adipinsäure, Hexandiol/Neopentyl-
glykol (Molverhältnis 65:35), OH-Zahl: 66

B:    Polyester aus Adipinsäure/Phthalsäure, Ethylenglykol, OH-Zahl: 64 (molares Verhältnis Adipinsäure:Phthalsäure:Ethylenglykol = 49:51:118)

C.    Polyester aus Phthalsäure, Ethylenglykol wie in
Beispiel 1A

D:    Polyester aus Adipinsäure, Diethylenglykol wie in
Beispiel 1A

E:    Polyester aus Phthalsäureanhydrid, Diethylenglykol
(Molverh. 1/0.8) mit Ethylenoxid zum Polyether verlängert, OH-Zahl: 309

MDI: 4,4'-Diisocyanatodiphenylmethan

TDI: 2,4- und 2,6-Diisocyanatotoluol (Molverhältnis
65:35)

BuAc: Butylacetat

EE:   Ethylacetat

MPA: 1-Methoxypropyl-2-acetat

[1]:  Methylethylketon/Cyclohexanon 7:3

## Patentansprüche

1. Verfahren zur Herstellung von hochglänzenden Lackledern, bei welchem Hydroxylgruppen enthaltende Oligourethane mit Polyisocyanaten umgesetzt werden, dadurch gekennzeichnet, daß das Oligourethan aufgebaut ist aus
A) mindestens 2 Makrodiolen im Molverhältnis von 1:6 bis 6:1, wobei
1) das eine Makrodiol ein mittleres Molekulargewicht von 254 bis 650 hat und mindestens einen aromatischen oder gegebenenfalls ungesättigten cycloaliphatischen Ring enthält, und
2) das zweite Makrodiol eine mittleres Molekulargewicht von 1200 bis 3000, mindestens aber ein 3-faches Molgewicht von A)1) besitzt,
und

B) mindestens einem Diisocyanat, wobei das Molverhältnis Makrodiole/Diisocyanat 10:9 bis 10:3 beträgt.

2. Verfahren nach Anspruch 1, dadurch gekennzeichnet, daß das Molverhältnis Makrodiol A/Diisocyanate B 10:7 bis 10:4 beträgt.

3. Verfahren nach den Ansprüchen 1 und 2, dadurch gekennzeichnet, daß die Makrodiole A1 und A2 im Molverhältnis 1:3 bis 3:1 eingesetzt werden.

4. Verfahren nach den Ansprüchen 1 bis 3, dadurch gekennzeichnet, daß das Makrodiol A1 ein mittleres Molgewicht von 350 bis 600 aufweist.

**Claims**

1. A process for the production of high-gloss patent leathers in which hydroxyfunctional oligourethanes are reacted with polyisocyanates, characterized in that the oligourethane is synthesized from
   A) at least two macrodiols in a molar ratio of 1:6 to 6:1,
      1) the first macrodiol having an average molecular weight of 254 to 650 and containing at least one aromatic or optionally unsaturated cycloaliphatic ring and
      2) the second macrodiol having an average molecular weight of 1,200 to 3,000, but at least three times the molecular weight of A)1),
      and
   B) at least one diisocyanate, the molar ratio of macrodiols to diisocyanate being 10:9 to 10:3.

2. A process as claimed in claim 1, characterized in that the molar ratio of macrodiol A to diisocyanate B is 10:7 to 10:4.

3. A process as claimed in claims 1 and 2, characterized in that the macrodiols A1 and A2 are used in a molar ratio of 1:3 to 3:1.

4. A process as claimed in claims 1 to 3, characterized in that the macrodiol A1 has an average molecular weight of 350 to 600.

**Revendications**

1. Procédé de préparation de cuir vernis de brillance élevée au cours duquel on fait réagir des oligo-uréthannes contenant des groupements hydroxyle avec des polyisocyanates, caractérisé en ce que l'oligo-uréthanne est constitué de
   A) au moins deux macrodiols, à un rapport molaire compris entre 1:6 et 6:1,
      1) le premier macrodiol ayant une masse moléculaire moyenne comprise entre 254 et 650 et contenant au moins un noyau aromatique ou éventuellement cycloaliphatique insaturé, et
      2) le deuxième macrodiol présentant une masse moléculaire moyenne comprise entre 1 200 et 3 000, mais valant au moins trois fois la masse moléculaire de A)1),
      et
   B) au moins un diisocyanate, le rapport molaire macrodiols/diisocyanate étant compris entre 10:9 et 10:3.

2. Procédé selon la revendication 1, caractérisé en ce que le rapport molaire macrodiols A/diisocyanates B est compris entre 10:7 et 10:4.

3. Procédé selon les revendications 1 et 2, caractérisé en ce que les macrodiols A1 et A2 sont utilisés à un rapport molaire compris entre 1:3 et 3:1.

4. Procédé selon les revendications 1 à 3, caractérisé en ce que le macrodiol A1 présente une masse moléculaire moyenne comprise entre 350 et 600.